# EUROPEAN PATENT SPECIFICATION

(11) **EP 1 864 521 B1**
(45) Date of publication and mention of the grant of the patent: **16.06.2010**
(21) Application number: 06738366.1
(22) Date of filing: 15.03.2006
(51) Int. Cl.: H04W 8/06

(54) **METHOD AND APPARATUS BY WHICH A HOME NETWORK CAN DETECT AND COUNTERACT VISITED NETWORK INBOUND NETWORK TRAFFIC REDIRECTION**
VERFAHREN UND VORRICHTUNG, WODURCH EIN HEIMATNETZWERK EINE UMLENKUNG VON ANKOMMENDEM NETZWERKVERKEHR IN EINEM BESUCHTEN NETZWERK ERKENNEN UND DIESER ENTGEGENWIRKEN KANN
METHODE ET APPAREIL AU MOYEN DESQUELS UN RESEAU DOMESTIQUE PEUT DETECTER ET PEUT REAGIR CONTRE UN REACHEMINEMENT DE TRAFIC DE RESEAU D'ARRIVEE DE RESEAU VISITE

(30) Priority: 15.03.2005 US 662028 P; 12.04.2005 US 670914 P
(43) Date of publication of application: 12.12.2007
(73) Proprietor: Roamware, Inc., San Jose, CA 95128 (US)
(72) Inventor: JIANG, Yeu, Jun, Danville, CA 94506 (US)
(74) Representative: Wallis, Helen Frances Mary
(86) International application number: PCT/US2006/009295
(87) International publication number: WO 2006/099476

(56) References cited:
- EP-A- 1 463 366
- WO-A-02/069660
- WO-A-2004/014101
- US-A- 6 058 309
- US-A1- 2006 068 778
- US-A1- 2008 020 760

## Description

### BACKGROUND

### Field of the Invention

The present invention relates to counteracting steering of inbound roaming by a visited public mobile network.

### Background of the Technology

United States Patent Application Number 20040087305 (publication number 10/635,804) and International Patent Application WO 2004/014101 entitled "Method and System for Cellular Network Traffic Redirection" disclose a method within a mobile telecommunications network such as a GSM network environment, for redirecting a home network (HPMN) operator's outbound roamers' traffic to preferred visited networks or according to distribution control of the home operator's determination. An embodiment of that type of outbound Traffic Redirection (TR) solution is based on MAP signaling and is deployed on the network side that is SIM independent and deals with handset idiosyncrasies. Since the filing of that United States and international patent application, dozens of (HPMN) operators have deployed or are about to deploy that type of MAP signaling-based network TR solution in their networks. Furthermore, the GSM Association has also published its guideline IR 73 regarding this type of traffic redirection service termed as Steering of Roaming (SoR). However, the non-preferred visited networks may want to avoid the roaming traffic being redirected away from their networks.

Document WO 2006/110833 teaches a method by which a visited mobile telecommunications network (VPMN) can provide a form of inbound traffic redirection (ITR) such that it can retain inbound roamers, or improve its chances of preventing those inbound roamers from unwittingly leaving that visited network and latching on to a different visited network.

Successful TR or SoR, necessarily results in certain VPMN operators losing lucrative inbound roaming traffic. Accordingly, those visited network operators will become interested in technological measures to combat TR. Document WO 2006/099388 teaches such a method of automatically combating traffic redirection at the visited network. The invention disclosed there serves to make an inbound roamer's registration with the VPMN successful by defeating both HPMN's attempt to engage in outbound TR and a competitor VPMN's attempt to retain the roamer by technological measures such as ITR. Anticipating the need for VPMNs to use technological measures to counter these attempts to oppose outbound or inbound TR, Document WO 2006/099389 teaches such approaches for an HPMN to counter possible anti-TR measures attempted by an VPMN.

Yet there is a need in the art for a means by which a first VPMN can neutralize or defeat the technological measures by which competing VPMNs attempt to steer away, or retain inbound roaming traffic in the face of that first VPMN's attempted inbound traffic redirection.

### Summary

To further protect the HPMN operators' investment in TR, the present invention provides a set of technological measures by which a can counter anti-TR attempts by undesired VPMNs in the coverage area of the HPMN's desired VPMN. This solution detects and defends against a VPMN operator's possible tactics to delay an inbound roamer's attempt to leave the VPMN so to register other networks within the same country as the VPMN. It makes the following claims within the GSM network environment
1. The general framework of using MAP signaling to detect about the VPMN's ITR and so to produce corresponding actions and reports
2. The general framework of using MAP signaling to defend against the VPMN's inbound TR

According to a first aspect of the invention there is provided a method for countering a traffic redirection of an inbound roaming mobile station in a Visiting Public Mobile Network (VPMN) by a Home Public Mobile Network (HPMN), the method comprising the steps of: holding a second registration message from a second VPMN on an outbound roamer of the HPMN, on detecting that the status of an immediately previous message sent from the HPMN to the second VPMN on the outbound roamer was a location cancellation and the second registration message from the second VPMN on the outbound roamer is received while a first registration message from a first VPMN for the outbound roamer is being processed at the HPMN; detecting the status of the first registration message; and routing the second registration message for processing only on detecting a failure of the first registration message.
In one embodiment, detecting the status of the first and the second registration messages comprises passively monitoring the exchange of registration messages between the VPMN and the HPMN.
In another embodiment, detecting the status of the first and the second registration messages comprises actively monitoring (i.e. in the signaling path of roaming messages) the exchange of registration messages between the VPMN and the HPMN.
Preferably, the registration message is a Location Update (LUP) message. Preferably, the failure of the first registration message includes aborting the registration message, rejecting the registration message with error and time-out of the registration message.
In some embodiments, the method further comprises detecting that the immediately previous message sent from the HPMN to the second VPMN of the second registration message is a location cancellation.
In some embodiments, the method further comprises failing the second registration message on detecting a success of the first registration message.
Preferably, the failure of the second registration message includes aborting the registration message, rejecting the registration message with error and time-out of the registration message.
In some embodiments, the method further comprises failing the second registration message on detecting that the status of an immediately previous registration message on the first VPMN was a success.
According to another aspect of the invention, there is provided a system for countering a traffic redirection of an inbound roaming mobile station in a Visiting Public Mobile Network (VPMN) by a Home Public Mobile Network (HPMN), the system comprising: a probing block for observing at least one registration message exchanged between the VPMN and the HPMN; a holding block for holding a second registration message from a second VPMN for an inbound roamer, while a first registration message from a first VPMN for the inbound roamer is being processed; a detecting block for detecting the status of the at least one registration message exchanged between the VPMN and the HPMN; and a routing block for routing the second registration message for processing.
Preferably, the probing block intercepts a signaling link between the HPMN and an international STP. In embodiments, the probing block passively monitors the registration messages exchanged between the VPMN and the HPMN. Preferably, the probing block is coupled to the HPMN Roaming STP. Preferably, the probing block monitors the registration messages exchanged between the VPMN and a HPMN STP.
According to another aspect of the present invention, there is provided a computer program product comprising a computer readable medium including a computer readable program code for countering a traffic redirection of an inbound roaming mobile station in a Visiting Public Mobile Network (VPMN) by a Home Public Mobile Network (HPMN), the computer program product comprising: computer readable program code configured for performing the above method.

### BRIEF DESCRIPTION OF THE FIGURES

Figure 1 illustrates an architecture for anti-ITR in an in-signaling path embodiment of the present invention.

Figure 2 depicts another possible routing option under an embodiment of the present invention that does not use Translation Type (TT).

Figure 3 depicts yet another routing option under an embodiment using translation type.

Figure 4 depicts yet another routing approach under an embodiment of the present invention that does not use translation type.

Figure 5 depicts yet another routing approach under an embodiment of the present invention that does use translation type.

Figure 6 depicts an exemplary anti-ITR signal flow under the present invention to defend against the ITR attack by a second VPMN.

Figure 7 depicts an exemplary signal flow of a genuine concurrent registration under the present invention.

### DETAILED DESCRIPTION OF THE INVENTION

According to the present invention, a solution for counteracting visited network (VPMN) based inbound network traffic redirection (hereinafter "anti-ITR") can be deployed in the HPMN network within the signaling path, or in other embodiments by means of a monitoring approach. It can be implemented or deployed as an add-on module of the in signaling-path based HPMN TR solution.

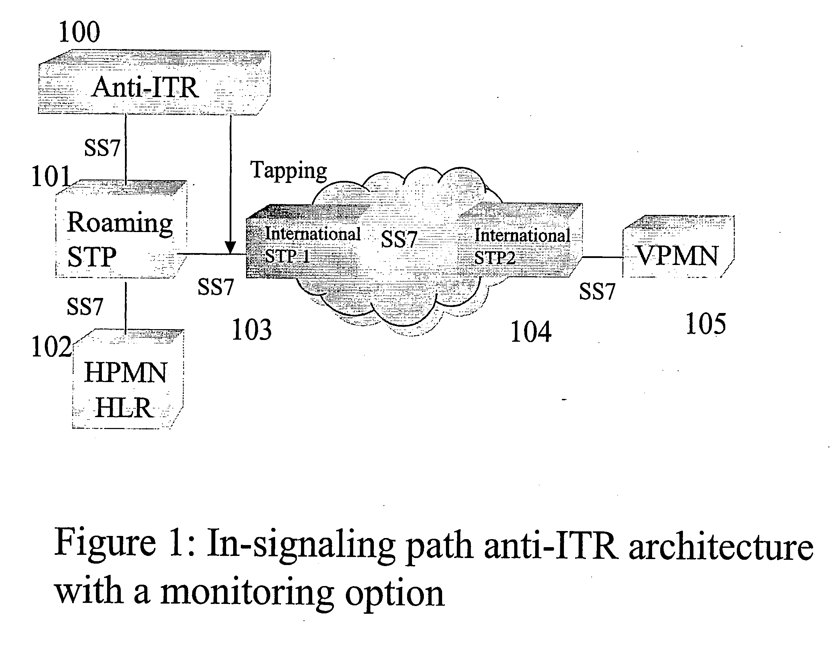

Figure 1 illustrates an architecture for anti-ITR in an in-signaling path embodiment. In this architecture, roaming SCCP messages including Location Update Messages can be redirected thru the anti-ITR 100 by the HPMN Roaming STP 101 (Signal Transfer Point) before messages reach HPMN HLR 102. To avoid looping, any number of deployment options may be suitable including without limitation: redundancy with primary and secondary routing are possible improvements on these options.

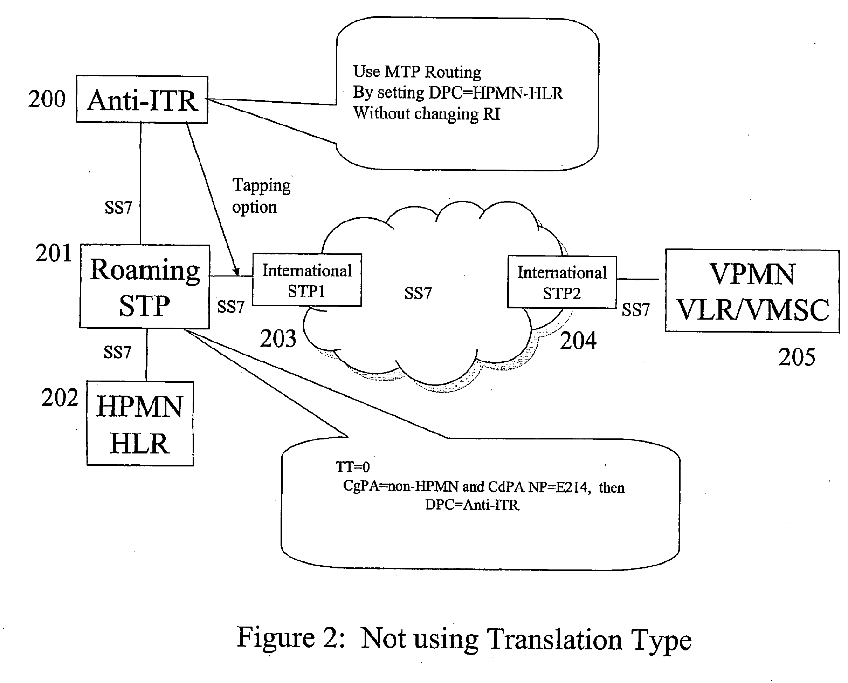

Figure 2 depicts another possible routing option under an embodiment of the present invention that does not use Translation Type (TT). In this embodiment, all SCCP messages with CdPA Numbering Plan E214 and CgPA (calling party address) from non-HPMN are sent to DPC (Destination Point Code) of an anti-ITR 200 module, without changing Routing Indicator (RI) (which could normally be Global Title (GT)-based.) When anti-ITR 200 sends an SCCP message thru a roaming STP 201 to a real HPMN HLR 202, it can use the MTP level routing to route the SCCP message to HPMN HLR 202 without changing RI.

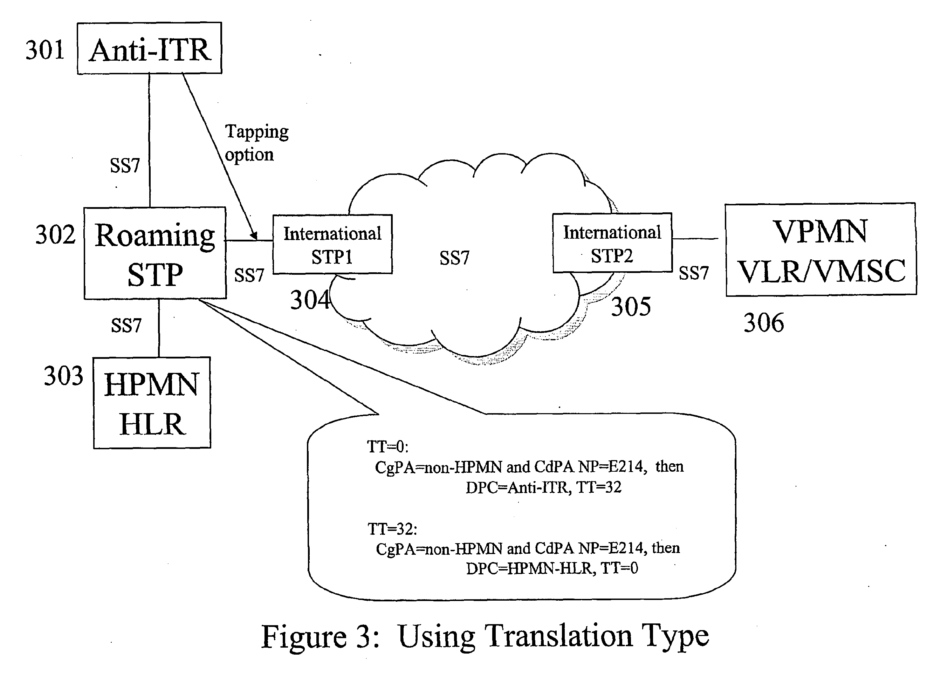

Figure 3 depicts yet another routing option under an embodiment using translation type. In this embodiment, all SCCP messages with CdPA (Called-Party-Address) Numbering Plan E214 and CgPA (Calling Party Address) from a non-HPMN are sent to DPC (Destination Point Code) of an anti-ITR module 300 with a new destination translation type (e.g. 32) but without changing RI. When the anti-ITR 300 relays the message back through a Roaming STP 301, the new transaction type 32 can be applied. In the new translation type 32, all SCCP messages with CdPA Numbering Plan E214 and CgPA from a non-HPMN can be sent to DPC (Destination Point Code) of an HPMN HLR 301 with a destination translation type 0/unknown but without changing RI.

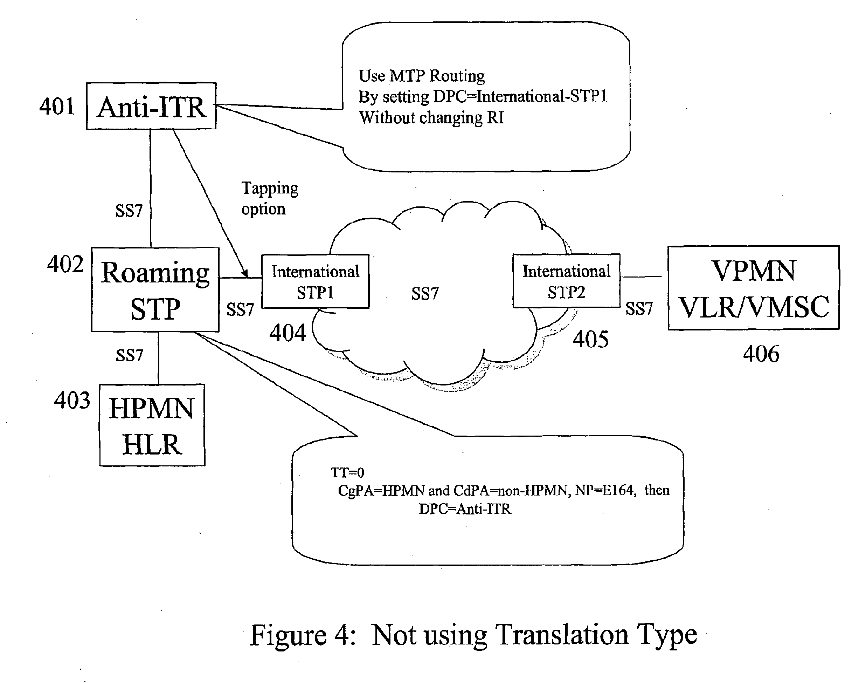

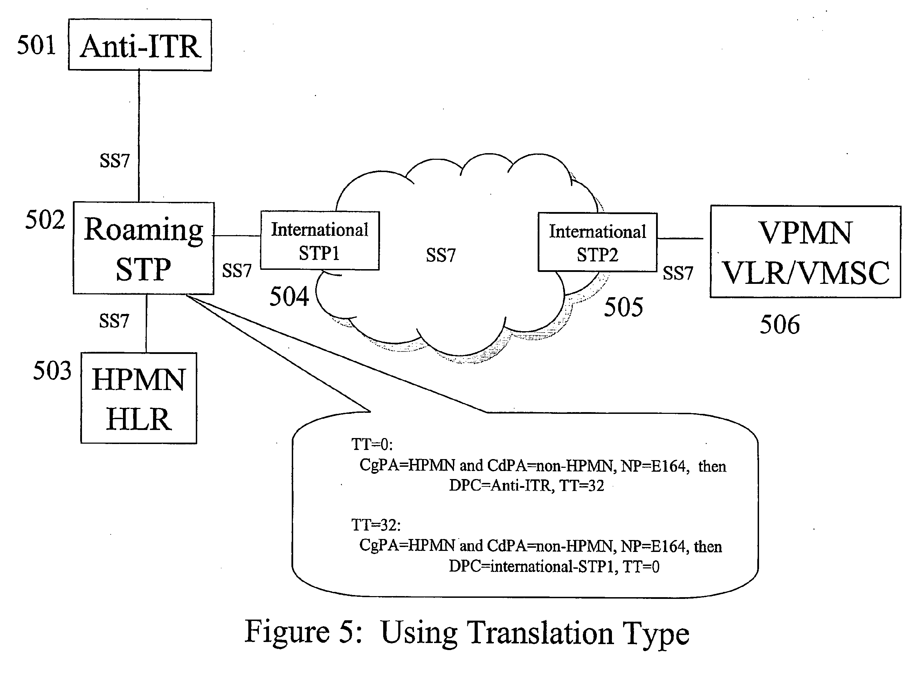

Similar approaches can be used to route all SCCP messages with CgPA from an HPMN and CdPA from a non-HPMN and NP being E614 by means of an anti-ITR solution under the present invention. Figure 4 depicts yet another such approach without using translation type, and Figure 5 depicts a possible embodiment that does use translation type.

Note that the SCCP re-routing options do not necessarily require the rerouting of SCCP messages of E164 CdPA from HPMN to non-HPMN thru an anti-ITR module if the SCCP messages from HPMN to VPMN at the roaming links are monitored. Therefore, use of a monitoring option is depicted in the anti-ITR network architecture.

But whichever of the foregoing or other possible deployment options are applied, an anti-ITR solution under the present invention normally would receive an outbound roamer's Location Update transactions (including acknowledgement and cancel location from HPMN HLR to VPMN VLR) between VPMN and HPMN.

To the extent a roamer still succeeds in registering on ITR applying VPMN network after an HPMN anti-ITR solution, then the other HPMN can deduce the failure of its HPMN anti-ITR solution and the success of the VPMN ITR solution. If the roamer failed to register on the VPMN network after the anti-ITR solution, then HPMN can deduce the success of the HPMN anti-ITR solution and the failure of the VPMN ITR solution.

Based on these types of deductions and subsequent success or failure of HPMN anti-ITR, HPMN can produce all kinds of reports including without limitation signaling load overhead, anti-ITR success/failure, percentage of redirected outbound roaming traffic and many other reports of concern to an HPMN or others interested in monitoring or thwarting inbound traffic redirection.

It is conceivable that agreements among internationally diverse operators, or initiatives by industry groups such as the GSM Association, or even local laws or regulations could be taken to oppose or even outlaw inbound traffic redirection. The anti-ITR solutions of the present invention can be applied to enforce those initiatives by defeating inbound traffic redirection. As the above example indicates, even to the extent that these solutions fail to defeat inbound traffic redirection, they still may be applied to monitor the occurrence of inbound traffic redirection and send reports to the regulatory bodies, industry associations, or international operators concerned with such violations or use of inbound traffic redirection.

One key aim of the proposed anti-ITR solutions under the present invention is to hold the MAP Location Update message (when routed thru an anti-ITR solution) regarding an HPMN outbound roamer from a new VPMN (say, VPMN 2) when that roamer is already in the middle of a new location update in another VPMN (say, VPMN 1) and the new VPMN (VPMN 2) has just been canceled with respect to the same roamer. Only if the earlier location update is observed (via rerouting or monitoring) to be aborted or ended with error (System failure, unexpected data value, missing parameter etc) or timed-out without completing the transaction, then the currently-held location update of that roamer on the new VPMN can be allowed to proceed through its normal routing to the HLR. Otherwise the held MAP location update could either be aborted or timed-out or rejected with error (System failure, unexpected data value etc) against the new VPMN (VPMN 2).

Note that if the earlier location update with the other VPMN (VPMN 1) is successful, then the held location update message would not normally be relayed to the HPMN HLR. Note also that anti-ITR under the present invention need not hold a location update message regarding an HPMN roamer from a VPMN if an earlier location message is already completed (for instance, whether there is an abort or a location update response irrespective of error or not). Neither would anti-ITR under the present invention necessarily hold a location update message regarding an HPMN roamer from a VPMN that has not been previously cancelled on the same roamer.

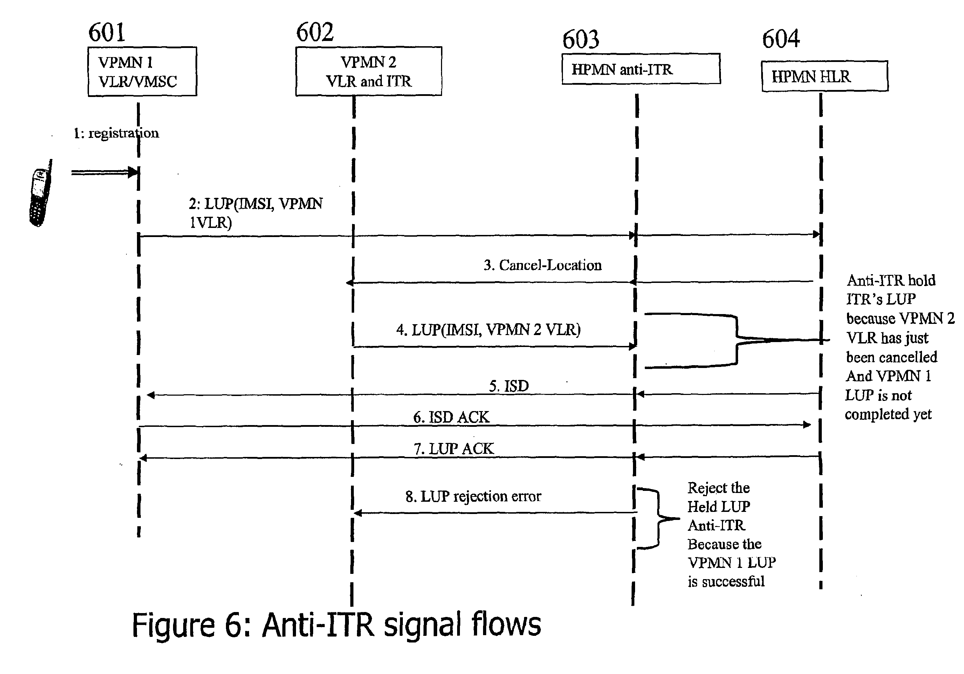

Figure 6 depicts an exemplary anti-ITR signal flow under the present invention to defend against the ITR attack by VPMN 2.
1. Here, an outbound roamer registered with VPMN 2 is registering with a VPMN 1 VLR 600.
2. VPMN 1 VLR 600 sends LUP to a HPMN HLR 603 (redirected thru the HPMN anti-ITR 602). An HPMN Anti-ITR 602 noted that this LUP transaction is not completed yet
3. HPMN HLR 603 sends cancel location to the VPMN 2 VLR/ITR 601 (redirected thru or monitored by the HPMN anti-ITR 602). The HPMN anti-ITR 602 noted the VPMN 2 to where the cancel-location is sent.
4. VPMN 2 ITR 601 solution fakes a location update as if the roamer were back in VPMN 2. HPMN anti-ITR 602 holds the LUP message from VPMN 2 because HPMN is still in the middle of the LUP transaction with VPMN 1 regarding the same roamer and the LUP comes from the VPMN that a cancel-location has just been sent to on the same roamer
5. HPMN HLR 603 sends ISD to the VPMN 1 VLR 600 (redirected thru or monitored by the HPMN anti-ITR 602)
6. VPMN 1 VLR 600 sends ISD ack back to the HPMN HLR 603
7. HPMN HLR 603 sends LUP ACK to the VPMN 1 VLR 600 (redirected thru or monitored by the HPMN anti-ITR 602). HPMN Anti-ITR 602 notes that the VPMN 1 LUP transaction is completed
8. HPMN anti-ITR 602 sends LUP error on the held VPMN 2 LUP to VPMN 2 VLR/ITR 601

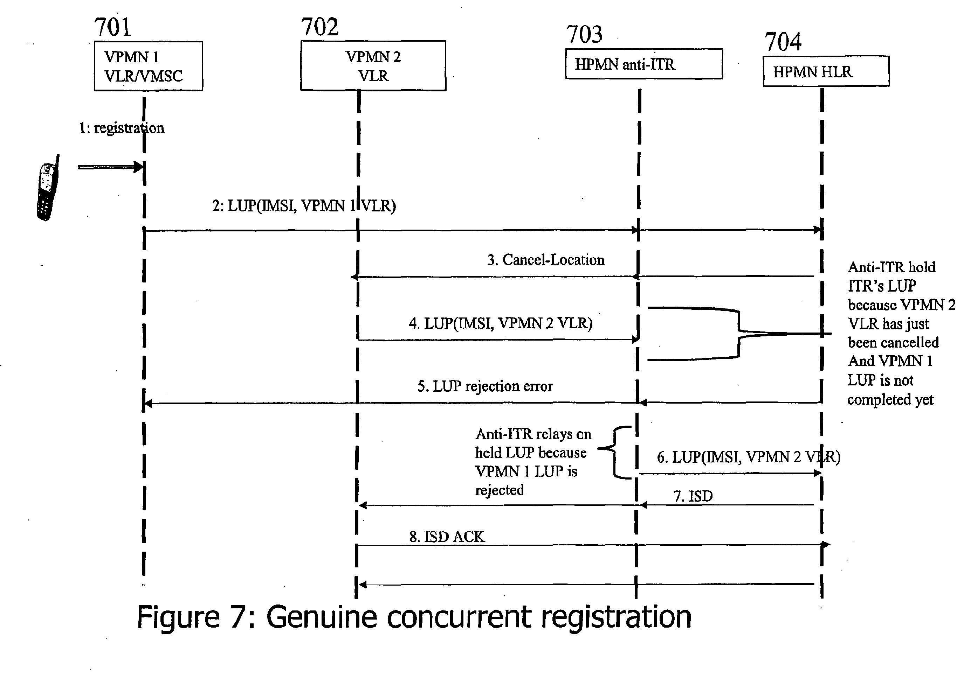

Figure 7 depicts an exemplary signal flow of a genuine concurrent registration under the present invention.
1. Here, an inbound roamer registered with VPMN 2 is registering with VPMN 1.
2. VPMN 1 VLR 700 sends LUP to HPMN HLR 703 (redirected thru a HPMN anti-ITR 702). HPMN Anti-ITR 702 noted this transaction is not completed yet
3. HPMN HLR 703 sends cancel location to VPMN 2 VLR/ITR 701 (redirected thru or monitored by the HPMN anti-ITR 702). HPMN anti-ITR 702 notes the VPMN 2 to which the cancel-location is sent.
4. VPMN 2 VLR 701 sends a genuine a location update because the roamer is immediately back in VPMN 2. HPMN anti-ITR 702 holds the LUP message from VPMN 2 because HPMN is still in the middle of the LUP transaction with VPMN 1 on the same roamer and the LUP comes from the VPMN that a cancel-location has just been sent to on the same roamer
5. HPMN HLR 703 sends LUP reject error to VPMN 1 VLR 700 (redirected thru or monitored by the HPMN anti-ITR 702). HPMN Anti-ITR 702 notes that the VPMN 1 LUP transaction is completed with error. HPMN anti-ITR 702 then relays the held VPMN 2 LUP to HPMN HLR 703
6. HPMN HLR 703 sends ISD (redirected thru or monitored by the HPMN anti-ITR 702) to VPMN 2 VLR 701
7. VPMN 2 VLR 701 sends ISD ack to HPMN HLR 703
8. HPMN HLR 703 sends LUP ack (redirected thru or monitored by the HPMN anti-ITR 702) to VPMN 2 VLR 701

### Other Variations

Provided above for the edification of those of ordinary skill in the art, and not as a limitation on the scope of the invention, are detailed illustrations of a scheme for generating and provisioning the CSI of the outbound roamer in a wireless communication network, who has moved onto a VPMN and is detected as being registering with the VPMN. Numerous variations and modifications of the present invention will of course occur to those of ordinary skill in the art in view of the embodiments that have now been disclosed. For example, while in the described embodiments, the present invention is implemented primarily from the point of view of GSM mobile networks, the present invention may also be effectively implemented on CDMA, 3G, WCDMA, GPRS, etc., or any other network of common carrier telecommunications in which end users are normally configured to operate within a "home" network to which they normally subscribe, but have the capability of also operating on other neighboring or remote visited networks.

### Technical references

GSM 902, Q71X, Q70X, Q77X,
GSM 1111
GSM 1114
IR 73 Steering of Roaming
GSM 348SecurityOTA,
GSM 31048SecurityOTA,
GSM 23119GatewayLocationRegister,
GSM 408MobileARadio
GSM 23122MobileStattionProcedure
GSM 24008MobileRadio,
GSM22011ServiceAccessiblity
GSM25304IdleModeSelection
GSM29010ErrorNetworkMpping
GSM 29002MAP

### Abbreviations

| **Abbreviation** | **Description** |
|---|---|
| 3G | Third generation of mobile |
| BSC | Base Station Controller |
| BCSM | Basic Call State Model |
| CAMEL | Customized Application for Mobile Enhanced Logic |
| CDMA | Code Division Multiplexed Access |
| CLI | Calling Line Identification |
| CdPA | Called Party Address |
| CgPA | Calling Party Address |
| CAP | Camel Application Part |
| CC | Country Code |
| CB | Call Barring |
| CSI | Camel Subscription Information |
| DPC | Destination Point Code |
| GMSC | Gateway MSC |
| GPRS | General Packet Radio System |
| GLR | Gateway Location Register |
| GSM | Global System for Mobile |
| GSM SSF | GSM Service Switching Function |
| GT | Global Title |
| HLR -H | HLR from HPMN |
| HLR | Home Location Register |
| HPMN | Home Public Mobile Network |
| IMSI | International Mobile Subscriber Identity |
| IN | Intelligent Network |
| ISG | International Signal Gateway |
| INAP | Intelligent Network Application Part |
| ISD | MAP Insert Subscriber Data |
| IAM | Initial Address Message |
| IDP | Initial DP IN/CAP message |
| ISUP | ISDN User Part |
| LUP | MAP Location Update |
| MAP | Mobile Application Part |
| MCC | Mobile Country Code |
| MCC | Mobile Country Code |
| ME | Mobile Equipment |
| MNC | Mobile Network Code |
| MO | Mobile Originated |
| MSC | Mobile Switching Center |
| MSISDN | Mobile Subscriber ISDN Number |
| MSRN | Mobile Subscriber Roaming Number |
| MT | Mobile Terminated |
| MTP | Message Transfer Part |
| NP | Numbering Plan |
| NPI | Numbering Plan Indicator |
| NDC | National Dialing Code |
| ODB | Operator Determined Barring |
| OTA | Over The Air |
| O-CSI | Originating CAMEL Subscription Information |
| PRN | Provide Roaming Number |
| RNA | Roaming Not Allowed |
| RR | Roaming Restricted due to unsupported feature |
| RI | Routing Indicator |
| SPC | Signal Point Code |
| SRI | Send Routing Information |
| SCCP | Signal Connection Control part |
| STP | Signal Transfer Point |
| STP-H | HPMN STP |
| SRI-SM | Send Routing Information For Short Message |
| SSP | Service Switch Point |
| SSN | Sub System Number |
| SIM | Subscriber Identify Module |
| STK | SIM Tool Kit Application |
| SM-RP-UI | Short Message Relay Protocol User Information |
| STP | Signal Transfer Point |
| SS | Supplementary Services |
| TR | Traffic Redirection |
| T-CSI | Terminating CAMEL Service Information |
| TP | SMS Transport Protocol |
| UDHI | User Data Header Indicator |
| UDH | User Data Header |
| UD | User Data |
| VAS | Value Added Service |
| VLR - V | VLR from VPMN |
| VLR | Visited Location Register |
| VMSC | Visited Mobile Switching Center |
| VPMN | Visited Public Mobile Network |

## Claims

1. A method for countering a traffic redirection of an inbound roaming mobile station in a Visiting Public Mobile Network, VPMN, by a Home Public Mobile Network, HPMN, the method comprising the steps of:
- holding a second registration message from a second VPMN on an outbound roamer of the HPMN, on detecting that the status of an immediately previous message sent from the HPMN to the second VPMN on the outbound roamer was a location cancellation and the second registration message from the second VPMN on the outbound roamer is received while a first registration message from a first VPMN for the outbound roamer is being processed at the HPMN,
- detecting the status of the first registration message, and
- routing the second registration message for processing only on detecting a failure of the first registration message.

2. The method of claim 1, wherein detecting the status of the first and the second registration messages comprises passively monitoring the exchange of registration messages between the VPMN and the HPMN.

3. The method of claim 1, wherein detecting the status of the first and the second registration messages comprises actively monitoring (i.e. in the signaling path of roaming messages) the exchange of registration messages between the VPMN and the HPMN.

4. The method of claim 1, wherein the registration message is a Location Update, LUP, message.

5. The method of claim 1, wherein the failure of the first registration message includes aborting the registration message, rejecting the registration message with error and time-out of the registration message.

6. The method of claim 1, further comprising detecting that the immediately previous message sent from the HPMN to the second VPMN of the second registration message is a location cancellation.

7. The method of claim 1, further comprising failing the second registration message on detecting a success of the first registration message.

8. The method of claim 1, wherein the failure of the second registration message includes aborting the registration message, rejecting the registration message with error and time-out of the registration message.

9. The method of claim 1, further comprising failing the second registration message on detecting that the status of an immediately previous registration message on the first VPMN was a success.

10. A system for countering a traffic redirection of an inbound roaming mobile station in a Visiting Public Mobile Network, VPMN, by a Home Public Mobile Network, HPMN, the system comprising:
- a probing block for observing at least one registration message exchanged between the VPMN and the HPMN,
- a holding block for holding a second registration message from a second VPMN for an inbound roamer, while a first registration message from a first VPMN for the inbound roamer is being processed,
- a detecting block for detecting the status of the at least one registration message exchanged between the VPMN and the HPMN, and
- a routing block for routing the second registration message for processing.

11. The system of claim 10, wherein the probing block intercepts a signaling link between the HPMN and an international STP.

12. The system of claim 10, wherein the probing block passively monitors the registration messages exchanged between the VPMN and the HPMN.

13. The system of claim 10, wherein the probing block is coupled to the HPMN Roaming STP.

14. The system of claim 10, wherein the probing block monitors the registration messages exchanged between the VPMN and a HPMN STP.

15. A computer program product comprising a computer readable medium including a computer readable program code for countering a traffic redirection of an inbound roaming mobile station in a Visiting Public Mobile Network, VPMN by a Home Public Mobile Network, HPMN, the computer program product comprising:
- computer readable program code configured for performing when run on a computer the method according to any of claims 1 to 3, 7 and 9.

## Patentansprüche

1. Verfahren, um einer Verkehrsumlenkung einer ankommenden roamenden Mobilstation in einem Fremdmobilfunknetz VPMN durch ein Heimatmobilfunknetz HPMN entgegenzuwirken, wobei das Verfahren die folgenden Schritte umfasst:
- Halten einer zweiten Registrationsnachricht von einem zweiten VPMN auf einem abgehenden Roamer des HPMN, wenn detektiert wird, dass der Status einer von dem HPMN zu dem zweiten VPMN auf dem abgehenden Roamer gesendeten unmittelbar vorherigen Nachricht eine Standortlöschung war und die zweite Registrationsnachricht von dem zweiten VPMN auf dem abgehenden Roamer empfangen wird, während eine von einem ersten VPMN für den abgehenden Roamer gesendete erste Registrationsnachricht gerade in dem HPMN verarbeitet wird,
- Detektieren des Status der ersten Registrationsnachricht und
- Routen der zweiten Registrationsnachricht zur Verarbeitung nur beim Detektieren eines Fehlschlags der ersten Registrationsnachricht.

2. Verfahren nach Anspruch 1, wobei das Detektieren des Status der ersten und der zweiten Registrationsnachricht das passive Überwachen des Austauschs von Registrationsnachrichten zwischen dem VPMN und dem HPMN umfasst.

3. Verfahren nach Anspruch 1, wobei das Detektieren des Status der ersten und der zweiten Registrationsnachricht das aktive Überwachen (d.h. im Signalisierungspfad von Roaming-Nachrichten) des Austauschs von Registrationsnachrichten zwischen dem VPMN und dem HPMN umfasst.

4. Verfahren nach Anspruch 1, wobei die Registrationsnachricht eine Nachricht der Standortaktualisierung LUP ist.

5. Verfahren nach Anspruch 1, wobei der Fehlschlag der ersten Registrationsnachricht das Abbrechen der Registrationsnachricht, das Zurückweisen der Registrationsnachricht mit einem Fehler und das Time-Out der Registrationsnachricht umfasst.

6. Verfahren nach Anspruch 1, ferner mit dem Schritt des Detektierens, dass die von dem HPMN zu dem zweiten VPMN der zweiten Registrationsnachricht gesendete unmittelbar vorherige Nachricht eine Standortlöschung ist.

7. Verfahren nach Anspruch 1, ferner mit dem Schritt des Fehlschlagenlassens der zweiten Registrationsnachricht, wenn ein Erfolg der ersten Registrationsnachricht detektiert wird.

8. Verfahren nach Anspruch 1, wobei der Fehlschlag der zweiten Registrationsnachricht das Abbrechen der Registrationsnachricht, das Zurückweisen der Registrationsnachricht mit einem Fehler und das Time-Out der Registrationsnachricht umfasst.

9. Verfahren nach Anspruch 1, ferner mit dem Schritt des Fehlschlagenlassens der zweiten Registrationsnachricht, wenn detektiert wird, dass der Status einer unmittelbar vorherigen Registrationsnachricht auf dem ersten VPMN ein Erfolg war.

10. System, um einer Verkehrsumlenkung einer ankommenden roamenden Mobilstation in einem Fremdmobilfunknetz VPMN durch ein Heimatmobilfunknetz HPMN entgegenzuwirken, wobei das System Folgendes umfasst:
- einen Sondierungsblock zum Beobachten mindestens einer zwischen dem VPMN und dem HPMN ausgetauschten Registrationsnachricht,
- einen Halteblock zum Halten einer zweiten Registrationsnachricht von einem zweiten VPMN für einen ankommenden Roamer, während eine erste Registrationsnachricht von einem ersten VPMN für den ankommenden Roamer gerade verarbeitet wird,
- einen Detektionsblock zum Detektieren des Status der mindestens einen zwischen dem VPMN und dem HPMN ausgetauschten Registrationsnachricht und
- einen Routing-Block zum Routen der zweiten Registrationsnachricht zur Verarbeitung.

11. System nach Anspruch 10, wobei der Sondierungsblock eine Signalisierungsstrecke zwischen dem HPMN und einem internationalen STP abhört.

12. System nach Anspruch 10, wobei der Sondierungsblock die zwischen dem VPMN und dem HPMN ausgetauschten Registrationsnachrichten passiv überwacht.

13. System nach Anspruch 10, wobei der Sondierungsblock mit dem HPMN-Roaming-STP gekoppelt ist.

14. System nach Anspruch 10, wobei der Sondierungsblock die zwischen dem VPMN und einem HPMN-STP ausgetauschten Registrationsnachrichten überwacht.

15. Computerprogrammprodukt mit einem computerlesbaren Medium, das einen computerlesbaren Programmcode enthält, um einer Verkehrsumlenkung einer ankommenden roamenden Mobilstation in einem Fremdmobilfunknetz VPMN durch ein Heimatmobilfunknetz HPMN entgegenzuwirken, wobei das Computerprogrammprodukt Folgendes umfasst:
- computerlesbaren Programmcode, der dafür ausgelegt ist, das Verfahren nach einem der Ansprüche 1 bis 3, 7 und 9 auszuführen, wenn er auf einem Computer ausgeführt wird.

## Revendications

1. Méthode pour réagir contre un réacheminement de trafic d'une station mobile itinérante entrante dans un Réseau Mobile Public Visité, VPMN, par un Réseau Mobile Public de Rattachement, HPMN, la méthode comprenant les étapes de :
- retenue d'un second message d'enregistrement provenant d'un second VPMN sur un itinérant sortant du HPMN, à la détection que l'état d'un message immédiatement précédent envoyé par le HPMN au second VPMN sur l'itinérant sortant était une suppression de position et le second message d'enregistrement provenant du second VPMN sur l'itinérant sortant est reçu pendant qu'un premier message d'enregistrement provenant d'un premier VPMN pour l'itinérant sortant est traité au niveau du HPMN,
- détection de l'état du premier message d'enregistrement, et
- routage du second message d'enregistrement en vue de son traitement uniquement quand un échec du premier message d'enregistrement est détecté.

2. Méthode selon la revendication 1, dans laquelle la détection de l'état des premier et second messages d'enregistrement comprend la surveillance passive de l'échange de messages d'enregistrement entre le VPMN et le HPMN.

3. Méthode selon la revendication 1, dans laquelle la détection de l'état des premier et second messages d'enregistrement comprend la surveillance active (c.-à-d. dans le chemin de signalisation des messages itinérants) de l'échange de messages d'enregistrement entre le VPMN et le HPMN.

4. Méthode selon la revendication 1, dans laquelle le message d'enregistrement est un message d'Actualisation de Position, LUP.

5. Méthode selon la revendication 1, dans laquelle l'échec du premier message d'enregistrement comporte l'abandon du message d'enregistrement, le rejet du message d'enregistrement erroné et le dépassement par le message d'enregistrement d'un temps alloué.

6. Méthode selon la revendication 1, comprenant en outre la détection que le message immédiatement précédent envoyé par le HPMN au second VPMN du second message d'enregistrement est une suppression de position.

7. Méthode selon la revendication 1, comprenant en outre l'échec du second message d'enregistrement lors de la détection d'un succès du premier message d'enregistrement.

8. Méthode selon la revendication 1, dans lequel l'échec du second message d'enregistrement comporte l'abandon du message d'enregistrement, le rejet du message d'enregistrement erroné et le dépassement par le message d'enregistrement d'un temps alloué.

9. Méthode selon la revendication 1, comprenant en outre l'échec du second message d'enregistrement lors de la détection d'un succès d'un message d'enregistrement immédiatement précédent sur le premier VPMN.

10. Système pour réagir contre un réacheminement de trafic d'une station mobile itinérante entrante dans un Réseau Mobile Public Visité, VPMN, par un Réseau Mobile Public de Rattachement, HPMN, le système comprenant :
- un bloc de sondage pour observer au moins un message d'enregistrement échangé entre le VPMN et le HPMN,
- un bloc de retenue pour retenir un second message d'enregistrement provenant d'un second VPMN pour un itinérant entrant, pendant qu'un premier message d'enregistrement provenant d'un premier VPMN pour l'itinérant entrant est traité,
- un bloc de détection pour détecter l'état de l'au moins un message d'enregistrement échangé entre le VPMN et le HPMN, et
- un bloc de routage pour router le second message d'enregistrement en vue de son traitement.

11. Système selon la revendication 10, dans lequel le bloc de sondage intercepte une liaison de signalisation entre le HPMN et un STP international.

12. Système selon la revendication 10, dans lequel le bloc de sondage surveille passivement les messages d'enregistrement échangés entre le VPMN et le HPMN.

13. Système selon la revendication 10, dans lequel le bloc de sondage est couplé au STP itinérant du HPMN.

14. Système selon la revendication 10, dans lequel le bloc de sondage surveille les messages échangés entre le VPMN et le STP du HPMN.

15. Produit de programme informatique comprenant un support lisible par ordinateur comportant un code de programme lisible par ordinateur pour réagir contre un réacheminement de trafic d'une station mobile itinérante entrante dans un Réseau Mobile Public Visité, VPMN, par un Réseau Mobile Public de Rattachement, HPMN, le produit de programme informatique comprenant :
- un code de programme lisible par ordinateur configuré pour mettre en oeuvre, quand il est exécuté sur un ordinateur, le procédé selon l'une quelconque des revendications 1 à 3, 7 et 9.
